# FASCICULE DE BREVET EUROPEEN

(11) **EP 0 973 595 B1**
(45) Date de publication et mention de la délivrance du brevet: **05.09.2001**
(21) Numéro de dépôt: 98908147.6
(22) Date de dépôt: 06.02.1998
(51) Int. Cl.: B01D 21/00

(54) **DECANTEUR LAMELLAIRE MODULAIRE**
MODULARER LAMELLENABSCHEIDER
MODULAR LAMELLAR CLARIFIER

(43) Date de publication de la demande: 26.01.2000
(73) Titulaire: Ingenierie Systemes de Depollution pour l'Environnement (ISD Environnement), 52170 Bayard sur Marne (FR)
(72) Inventeur: VIAU, Jean-Yves, F-59830 Cysoing (FR); CHURLET, Patrick, F-59239 La Neuville (FR)
(74) Mandataire: Gérardin, Robert Jean René
(86) Numéro de dépôt international: FR9800239
(87) Numéro de publication internationale: WO9939800

(56) Documents cités:
- DE-A- 2 752 296
- US-A- 5 049 278
- PATENT ABSTRACTS OF JAPAN vol. 12, no. 5, 8 janvier 1988 & JP 62 163713 A (WASEDA GIKEN KK), 20 juillet 1987

## Description

L'invention concerne les installations de séparation des phases solides et liquides en écoulement gravitaire.

Afin de favoriser la décantation des particules solides contenues dans des liquides, il est courant d'utiliser des décanteurs lamellaires. Ceux-ci sont constitués d'un volume de transfert, dans lequel sont intégrées des plaques profilées parallèles et inclinées, limitant la course de la particule avant son piégeage sur une lame.

Cette technique a été particulièrement développée pour le traitement des eaux de ruissellement, mais elle peut être utilisée aussi dans toutes les activités où l'on souhaite séparer les liquides des solides par effet de décantation simple ou assistée selon des procédés physico-chimiques (coagulation, floculation, etc.).

Il est utilisé, à ce jour, trois types de décanteurs lamellaires :
- les décanteurs à contre-courant, dans lesquels l'effluent à traiter circule de bas en haut dans la cellule lamellaire,
- les décanteurs à co-courant, où l'effluent traverse la cellule lamellaire de haut en bas,
- les décanteurs à courants croisés, dans lesquels l'effluent traverse horizontalement la cellule en formant un angle à 90 ° avec le vecteur de chute des particules à piéger.

L'efficacité d'un décanteur est conditionnée par :
- la surface projetée correspondant à la projection à l'horizontal des plaques du décanteur ; cette caractéristique est fonction de l'angle d'inclinaison des plaques,
- l'écartement des plaques permettant, dans un même volume, d'augmenter la surface totale projetée,
- l'inclinaison des lames favorisant ou non l'autocurage du faisceau lamellaire.

Ainsi, pour optimiser le fonctionnement de ces décanteurs, il est possible de :
- diminuer l'inclinaison des plaques, en vue d'augmenter la surface totale projetée,
- limiter l'espace inter-lames, pour augmenter la surface totale projetée pour un même volume.

Toutefois, la diminution de l'espace inter-lames favorise l'obstruction des canaux et la diminution de l'inclinaison des plaques limite l'autocurage des lames et peut même le supprimer.

On connaît déjà un procédé de traitement de liquides contenant des particules solides en suspension, correspondant au préambule de la revendication 1 (DE 27 52 296 A), consistant par l'intermédiaire de décanteurs lamellaires à piéger et à agglomérer entre elles lesdites particules solides et à assurer leur évacuation vers un silo à boue, en plusieurs étapes successives après agglomération progressive des particules solides combinées à des phases d'évacuation, par gravité, des particules agglomérées vers le silo.

L'évacuation des particules agglomérées vers un silo disposé en dessous de décanteurs lamellaires a été divulguée par le brevet US-A-5.049.278.

Il n'en demeure pas moins, que même en combinant ces deux techniques, un pourcentage parfois important des particules en suspension, après avoir été piégées sur les lames, est repris par le courant traversier lors de la migration desdites particules vers le silo de stockage situé sous le système lamellaire.

Il résulte de ceci qu'un pourcentage parfois important des particules en suspension, après avoir été piégées sur les lames, est repris par le courant traversier lors de la migration des dites particules vers le silo de stockage situé sous le système lamellaire.

La présente invention a pour but de remédier à ces inconvénients. Cette invention, telle qu'elle est caractérisée dans les revendications, résout le problème consistant à créer un dispositif, avec lequel, d'une part, le traitement puisse être affiné selon le type d'effluent, tout en assurant une bonne évacuation des particules, et, d'autre part, les boues résultant de l'agglomération des particules puissent être transférées dans un silo inférieur, sans dispersion à nouveau sous l'effet de courants perturbants.

Les avantages obtenus, grâce à cette invention, consistent essentiellement en ceci que la disposition alternée et les longueurs spécifiques des différentes cellules constituant le dispositif permettent d'affiner le traitement suivant le type d'effluent, tout en assurant une bonne évacuation des particules agglomérées, sans risque de reprise par le flux traversier.

D'autres caractéristiques et avantages apparaîtront dans la description qui va suivre de plusieurs modes de réalisation de l'invention, donnés à titre d'exemple non limitatif au regard des dessins annexés sur lesquels :
- la figure 1 représente une vue de côté schématique, en coupe longitudinale, d'un dispositif de traitement à trois cellules, selon l'art antérieur,
- la figure 2 représente une vue de côté schématique, en coupe longitudinale, d'un dispositif de traitement à quatre cellules,
- la figure 3 représente une vue de côté, en coupe schématique, d'une installation de traitement des eaux, à décanteur lamellaire à association de cellules,
- la figure 4 représente une vue en coupe transversale partielle d'une cellule d'agglomération à éléments tubulaires de section cylindrique,
- la figure 5 représente une vue en coupe transversale partielle d'une cellule d'agglomération à éléments tubulaires de section carrée,
- la figure 6 représente une vue en coupe transversale partielle d'une cellule d'agglomération en nid d'abeilles,
- la figure 7 représente une vue en coupe transversale partielle d'une cellule alvéolaire.

Les figures représentent des installations de traitement par décantation des eaux de ruissellement d'origine pluviale, à décanteur lamellaire modulaire; lesquelles installations comportent, pour l'essentiel, une cuve cylindrique **10**, raccordée, par ses extrémités, respectivement à un conduit **11** d'arrivée de l'eau boueuse et à un conduit **12** d'évacuation de l'eau épurée, comportant, sur le dessus, des trappes d'accès **13a**, **13b** et **13c** et, à l'intérieur, deux cloisons **14** et **15** délimitant respectivement totalement, dans le sens vertical, un compartiment de filtration **16** et partiellement, vers le haut, un compartiment de décantation **20** surplombant un silo à boues **18**, et un compartiment de collecte **17** ; le dit compartiment de décantation **20** étant délimité, vers le haut, par des rails **19,** sur lesquels reposent, par l'intermédiaire de roulettes **22**, des châssis **21** à dispositif d'accrochage **23,** dans chacun desquels est montée, indifféremment, une cellule d'agglomération **24** ou une cellule d'évacuation **25,** en respectant un ordre prédéterminé en fonction du niveau d'épuration à obtenir et des caractéristiques des boues à retenir.

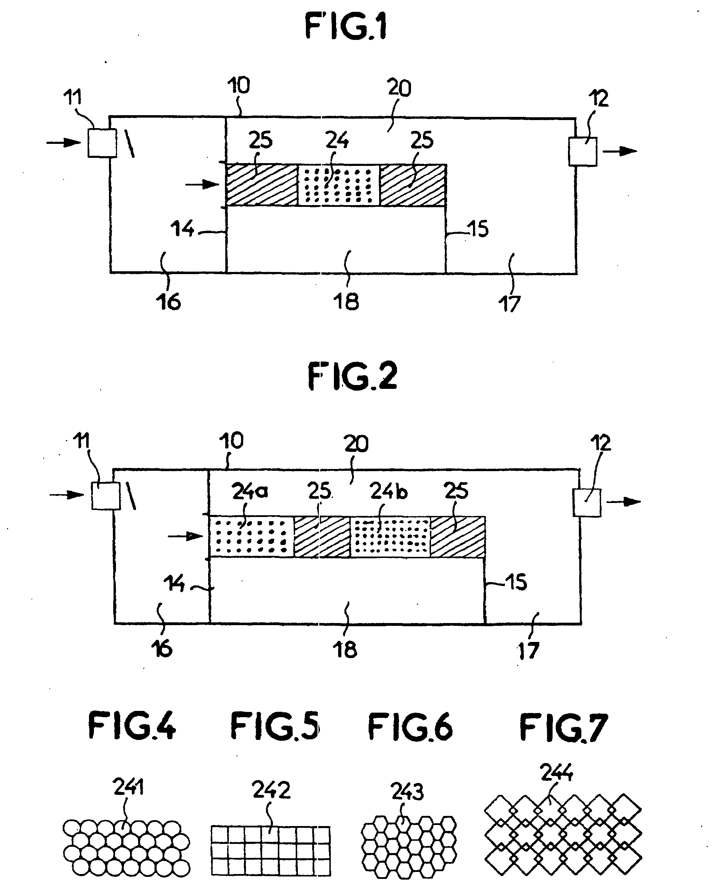

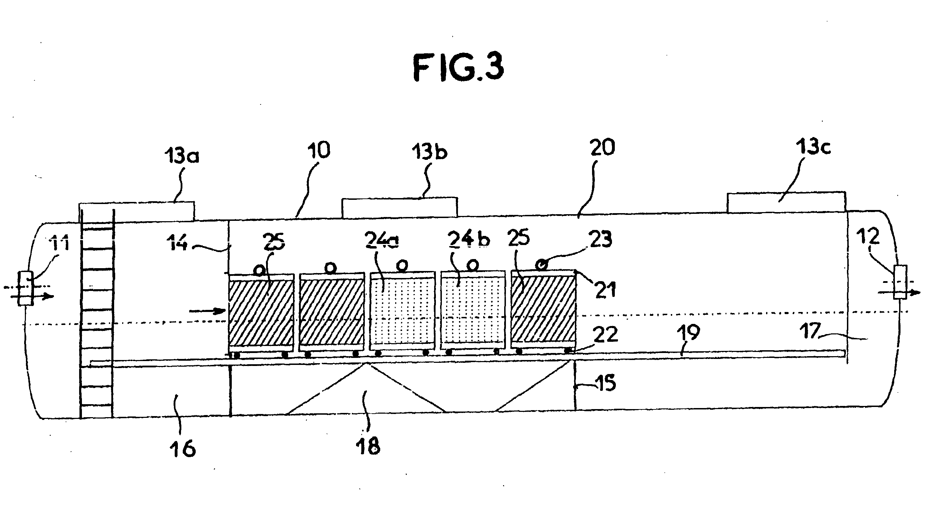

En examinant maintenant comparativement les figures 1 et 2, on remarque que, selon la nature et la granulométrie des particules solides en suspension dans le liquide à traiter , il est possible d'adapter le traitement en jouant uniquement sur l'association et l'arrangement de cellules d'agglomération **24** et de cellules d'évacuation **25.** Ainsi, avec la disposition de cellules selon la figura 1, déjà utilisée dans l'art, antérieur, il est possible, dans le cas d'un liquide peu chargé en particules solides (eau de ruissellement peu boueuse compte-tenu de la nature du sol et du système de drainage), de n'utiliser qu'une seule cellule d'agglomération **24** placée entre deux cellules d'évacuation **25,** disposées toutes trois au-dessus du silo à boues **18**. Le liquide est ainsi, après passage dans le compartiment de filtration **16**, collecté vers la première cellule d'évacuation **25**, où il perd les particules les plus denses et les plus grosses, qui tombent dans la partie avant du silo à boues **18,** avant de passer à travers la cellule d'agglomération **24** dans laquelle les particules subsistantes sont agglomérées, puis à travers la seconde cellule d'évacuation **25** à plaques, par l'intermédiaire de laquelle la quasi-totalité des particules résiduelles est piégée et dirigée vers la partie arrière du silo à boues **18**, où elle retombe ; ceci, avant transfert dans le compartiment de tranquillisation et de collecte **17**, d'où il est évacué par débordement par le conduit d'évacuation **12**.

Si l'on examine maintenant plus en détail la figure 2, on remarque que, dans le cas d'un liquide assez chargé en particules solides, il est possible, selon l'invention, d'adopter une autre association et un autre arrangement de cellules d'agglomération **24** et d'évacuation **25,** afin d'effectuer le traitement en deux phases se distinguant par le niveau de concentration obtenu au cours de chacune d'elle. C'est-à-dire que, pour réaliser la première phase, on associe, de l'amont vers l'aval, une cellule d'agglomération de grande section **24a** et une cellule d'évacuation **25** à plaques et, pour réaliser la seconde phase, une cellule d'agglomération de petite section **24b** et une cellule d'évacuation **25** à plaques; rien ne s'opposant bien sûr à ce que le nombre de phases soit augmenté au-delà de deux, avec réduction, pour chaque phase, de l'amont vers l'aval de la section de passage des éléments constituant la cellule d'agglomération **24.**

En se rapportant maintenant à la figure 3, représentant une vue de côté, en coupe schématique, d'un autre mode de réalisation de l'installation de traitement des eaux de ruissellement, selon l'invention on remarque que, dans ce cas, la décantation, en amont des cellules d'agglomération **24a** et **24b,** a été renforcée par l'association de deux cellules d'évacuation **25** à plaques, traversées successivement par le courant d'eau chargée. et que la concentration a été elle-même renforcée par l'association de deux cellules d'agglomération **24a** et **24b,** avant décantation résiduelle et finale par l'intermédiaire d'une seule cellule d'évacuation **25** à plaques. On remarque aussi que la réalisation modulaire des cellules **24, 25** et leur montage préalable, à la demande, dans des châssis **21** à roulettes **22** et à dispositif d'accrochage **23,** ainsi que l'existence de rails **19** au-dessus et sur toute la longueur du silo à boues **18** et de trappes d'accès **13a** à **13c** judicieusement disposées, se prêtent parfaitement à une adaptation rapide d'une installation de traitement à des cas particuliers, que ce soit lors de la réalisation d'installations de traitement ou au cours de l'utilisation de celles-ci.

Si l'on compare maintenant les figures 4 à 7, représentant différentes variantes de réalisation des cellules d'agglomération **24,** on remarque que celles-ci peuvent être constituées d'un assemblage de tubes cylindriques **241** (figure 4), de tubes carrés **242** (figure 5), d'une structure en nid d'abeilles **243** (figure 6), ou d'alvéoles **244** (figure 7) ; ces exemples n'étant pas exhaustifs. On conçoit donc aisément qu'il soit possible de donner, à chacun de ces types de cellules, un pouvoir de concentration particulier, en choisissant une section de tubes **241** ou **242,** de nid d'abeilles **243** et d'alvéoles **244** correspondante, et c'obtenir ainsi, pour chaque type de cellules, une gamme à pouvoir de concentration différent.

Le dispositif selon l'invention est destiné, principalement, au traitement des eaux de ruissellement, mais il peut s'appliquer à d'autres domaines où l'on souhaite séparer les liquides des solides par effet de décantation simple ou assisté, en recourant à des procédés physico-chimiques (coagulation, floculation, etc.).

## Revendications

1. Dispositif modulaire de traitement de liquides contenant des particules solides en suspension, comportant des décanteurs lamellaires (25) servant à piéger et à agglomérer entre elles lesdites particules solides et à évacuer celle-ci par gravité vers un silo à boues (18) disposé sous les décanteurs, le dispositif comprenant de cellules d'évacuation à plaques parallèles (25) et des cellules d'agglomération à faisceaux tubulaires (24) disposées en ligne, les cellules d'évacuation et les cellules d'agglomération étant disposées, en alternance, **caractérisé en ce que** la section des éléments tubulaires constituant les faisceaux tubulaires **(24a)** des cellules d'agglomération est différente d'une cellule à l'autre et en ce que lesdites cellules d'agglomération à faisceaux tubulaires **(24a, 24b)** sont disposées, de l'amont vers l'aval, dans l'ordre décroissant de la section des éléments des faisceaux tubulaires qu'elles comportent.

2. Dispositif selon la revendication 1, **caractérisé en ce qu**'il comporte une cellule d'agglomération **(24)** à faisceaux tubulaires disposée entre deux cellules d'évacuation **(25)** à plaques parallèles.

3. Dispositif selon la revendication 1, **caractérisé en ce qu**'il comporte deux cellules d'agglomération à faisceaux tubulaires **(24a, 24b),** séparées par une cellule d'évacuation à plaques parallèles **(25),** et une cellule d'évacuation à plaques parallèles **(25)** disposée en aval de la seconde cellule d'agglomération à faisceaux tubulaires **(24b).**

4. Dispositif selon la revendication 1, **caractérisé en ce qu**'il comporte deux cellules d'agglomération à faisceaux tubulaires associées (**24a**, **24b**) précédées de deux cellules d'évacuation à plaques (**25**) associées et suivies d'une seule cellule d'évacuation à plaques **(25)**.

5. Dispositif selon la revendication 1 ou 2, **caractérisé en ce que** chaque cellule **(24,25)** est montée dans un châssis **(21)** reposant par l'intermédiaire de roulettes (**22**) sur des rails (**19**) surplombant le silo à boues **(18).**

6. Dispositif selon la revendication 5, **caractérisé en ce que** chacun des châssis **(21)** est muni sur le dessus, d'un dispositif d'accrochage (**23**) permettant son lavage et sa manutention.

## Patentansprüche

1. Modulare Vorrichtung zur Behandlung von Flüssigkeiten, die feste Partikel in Suspension enthalten, wobei die Vorrichtung Lamellenabscheider (25) umfaßt, die zum Ausfällen und Agglomerieren der festen Partikel zwischen sich und zu ihrem Austrag durch Schwerkraft in ein Schlammsilo (18) dienen, das unter den Abscheidern angeordnet ist, wobei die Vorrichtung Evakuierungszellen mit parallelen Platten (25) und in Reihe angeordneten Agglomerationszellen mit Rohrbündeln (24) aufweist, und die Evakuierungszellen und die Agglomerationszellen abwechselnd angeordnet sind,
**dadurch gekennzeichnet**, daß
der Abschnitt der rohrförmigen Elemente, die die Rohrbündel (24a) der Agglomerationszellen bilden, sich von einer Zelle zur anderen unterscheidet, und das die Agglomerationszellen mit Rohrbündeln (24a, 24b) in Strömungsrichtung in abnehmender Reihenfolge vom Abschnitt der von ihnen getragenen rohrförmigen Elemente angeordnet sind.

2. Vorrichtung nach Anspruch 1, **dadurch gekennzeichnet**, daß sie eine Agglomerationszelle (24) mit Rohrbündeln umfaßt, die zwischen zwei Evakuierungszellen mit parallelen Platten (25) angeordnet ist.

3. Vorrichtung nach Anspruch 1, **dadurch gekennzeichnet**, daß sie zwei Agglomerationszellen mit Rohrbündeln (24a, 24b), die durch eine Evakuierungszelle mit parallelen Platten (25) getrennt sind, und eine Evakuierungszelle mit parallelen Platten (25) umfaßt, die stromabwärts von der zweiten Agglomerationszelle mit Rohrbündeln (24b) angeordnet ist.

4. Vorrichtung nach Anspruch 1, **dadurch gekennzeichnet**, daß sie zwei benachbarte Agglomerationszellen mit Rohrbündeln (24a, 24b) umfaßt, vor denen zwei benachbarte Platten - Evakuierungszellen (25) angeordnet sind und hinter denen eine einzelne Plätten-Evakuierungszelle (25) angeordnet ist.

5. Vorrichtung nach einem der Ansprüche 1 oder 2, **dadurch gekennzeichnet**, daß jede Zelle (24, 25) in einem Gehäuse (21) montiert ist, daß zwischen Rollen (22) auf den Schienen (19) angeordnet ist und in Bezug auf das Schlammsilo (18) überhängt.

6. Vorrichtung nach Anspruch 5, **dadurch gekennzeichnet**, daß jedes Gehäuse (21) auf dem Oberteil mit einer Aufhängevorrichtung (23) ausgestattet ist, die seine Wäsche und seine Handhabung ermöglicht.

## Claims

1. Modular device for treatment of liquids containing solid particles in suspension, comprising lamellar decanters (25) serving to trap and agglomerate between themselves the said solid particles and to evacuate the latter by means of gravity into a mud silo (18) disposed under the decanters, the said device comprising evacuation cells with parallel plates (25) and agglomeration cells with tubular bundles (24) disposed in line, the evacuation cells and the agglomeration cells being disposed alternately, **characterised in that** the section of tubular elements comprising the tubular bundles (24a) of the agglomeration cells differs from one cell to another, and in that the said agglomeration cells with tubular bundles (24a, 24b) are disposed, going downstream, in decreasing order of the section of the elements of the tubular bundles which they comprise.

2. Device according to claim 1, **characterised in that** it comprises an agglomeration cell (24) with tubular bundles disposed between two evacuation cells (25) with parallel plates.

3. Device according to claim 1, **characterised in that** it comprises two agglomeration cells with tubular bundles (24a, 24b), separated by an evacuation cell with parallel plates (25), and an evacuation cell with parallel plates (25) disposed downstream of the second agglomeration cell with tubular bundles (24b).

4. Device according to claim 1, **characterised in that** it comprises two associated agglomeration cells with tubular bundles (24a, 24b) preceded by two associated evacuation cells with plates (25) and followed by a single evacuation cell with plates (25).

5. Device according to claim 1 or 2, **characterised in that** each cell (24, 25) is mounted in a frame (21) resting, by means of small wheels (22), on rails (19) overhanging the mud silo (18).

6. Device according to claim 5, **characterised in that** each of the chassis (21) is equipped, at the top, with a hooking device (23) allowing it to be washed and maintained.
